# EUROPÄISCHE PATENTSCHRIFT

(11) **EP 3 659 933 B1**
(45) Veröffentlichungstag und Bekanntmachung des Hinweises auf die Patenterteilung: **28.04.2021**
(21) Anmeldenummer: 18208721.3
(22) Anmeldetag: 27.11.2018
(51) Int. Cl.: B65B 11/54, B65B 41/12

(54) **VERPACKUNGSMASCHINE ZUM VERPACKEN MIT DEHNFOLIE**
PACKAGING MACHINE FOR PACKAGING WITH STRETCH FILM
MACHINE D'EMBALLAGE DESTINÉE À L'EMBALLAGE AVEC FEUILLE EXTENSIBLE

(43) Veröffentlichungstag der Anmeldung: 03.06.2020
(73) Patentinhaber: Bizerba SE & Co. KG, 72336 Balingen (DE)
(72) Erfinder: Ellis, Eugen, 72229 Rohrdorf (DE)
(74) Vertreter: Huber, Meik

(56) Entgegenhaltungen:
- EP-A1- 0 044 820
- EP-A1- 0 284 538
- EP-B1- 3 093 244
- WO-A1-2004/000651

## Beschreibung

Die vorliegende Erfindung betrifft eine Verpackungsmaschine zum Verpacken von Verpackungsgütern mittels einer dehnbaren Folie, mit einer Folientransportvorrichtung zur Folienzuführung zu einem zu verpackenden Verpackungsgut, wobei die Folientransportvorrichtung eine erste und eine zweite Riemenfördereinrichtung zum Transport der Folie aufweist und wobei jede Riemenfördereinrichtung jeweils einen ersten und einen zweiten Transportriemen umfasst.

Aus der EP 3 093 244 B1 ist eine derartige Verpackungsmaschine zum Verpacken mittels Folien, insbesondere mittels Dehnfolien, bekannt, die dazu ausgebildet ist, die Dehnfolie mittels einer Folientransportvorrichtung mit einer ersten Riemenfördereinrichtung und einer zweiten Riemenfördereinrichtung dem zu verpackenden Gut zuzuführen.

Diese Verpackungsmaschinen arbeiten mit Dehnfolie, die aus Polyethylen (PE) oder Polyvinylchlorid (PVC) besteht. Die Folie ist sehr dünn, bevorzug zwischen 2 µm und 30 µm, besonders bevorzugt zwischen 12 µm und 16 µm dick. Die Transportriemen der Riemenfördereinrichtungen sind angetriebene Zahnriemen aus Gewebe, die an ihren Transportflächen rau sind und eine gewisse Oberflächenspannung aufweisen. Das sorgt dafür, dass die Folie zwischen zwei aneinandergedrückten Transportriemen durch Reibung gehalten und durch Bewegung der Transportriemen transportiert werden kann. Mit der Zeit lässt die Haftfähigkeit der Transportriemen jedoch nach und der Folientransport wird zunehmend fehleranfällig.

Aufgabe der vorliegenden Erfindung ist es, diesen Effekt zu verhindern oder zu minimieren und die Fehleranfälligkeit einer Verpackungsmaschine der eingangs genannten Art zu reduzieren.

Diese Aufgabe wird durch eine Verpackungsmaschine nach Anspruch 1 gelöst.

Erfindungsgemäß wird eine Verpackungsmaschine zum Verpacken von Verpackungsgütern mittels einer dehnbaren Folie vorgeschlagen. Die Verpackungsmaschine umfasst eine Folientransportvorrichtung zur Folienzuführung zu einem zu verpackenden Verpackungsgut. Die Folientransportvorrichtung weist eine erste und eine zweite Riemenfördereinrichtung zum Transport der Folie auf. Die Riemenfördereinrichtungen umfassen jeweils einen ersten und einen zweiten Transportriemen, die in einer durch die Folientransportvorrichtung vorgegebenen Folientransportrichtung synchron angetrieben und nebeneinander angeordnet sind. Zumindest die zweite Riemenfördereinrichtung ist in einer Richtung senkrecht zu der Folientransportrichtung bewegbar. Die Verpackungsmaschine umfasst ein bewegbares Folienführungselement, mit dem die Folie in die Folientransportvorrichtung einführbar ist. Das Folienführungselement umfasst eine Führungsplatte zur Führung der Folie. Die Führungsplatte weist in einer den Riemenfördereinrichtungen zugewandten, in vertikaler Richtung oberen Kante eine erste Ausnehmung sowie eine zweite Ausnehmung auf. Die erste Riemenfördereinrichtung ist in die erste Ausnehmung einführbar. Die zweite Riemenfördereinrichtung ist in die zweite Ausnehmung einführbar. Das heißt, zur Folienübergabe befindet sich die erste Riemenfördereinrichtung mit ihrem vorderen Teil teilweise in der ersten Ausnehmung. Die zweite Riemenfördereinrichtung befindet sich zur Folienübergabe mit ihrem vorderen Teil teilweise in der zweiten Ausnehmung. Um diese wechselseitige Position zu erreichen, wird die Führungsplatte in vertikaler Richtung auf die erste und die zweite Riemenfördereinrichtung zubewegt. Die erste und die zweite Riemenfördereinrichtung werden nicht in vertikaler Richtung bewegt. Die Folientransportvorrichtung weist ferner Reinigungsvorrichtungen für die Riemenfördereinrichtungen auf. In einer Ausführungsform umfasst die Folientransportvorrichtung eine erste Reinigungsvorrichtung für die erste Riemenfördereinrichtung und eine zweite Reinigungsvorrichtung für die zweite Riemenfördereinrichtung. In einer Ausführungsform umfasst jede Riemenfördereinrichtung eine erste Reinigungsvorrichtung für den ersten Transportriemen und eine zweite Reinigungsvorrichtung für den zweiten Transportriemen.

Während des Verpackungsvorgangs wird die Dehnfolie durch Reibung zwischen dem ersten Transportriemen und dem zweiten Transportriemen einer Riemenfördereinrichtung gehalten. Durch die synchrone Bewegung der Transportriemen wird die Dehnfolie entlang der Folientransportrichtung bewegt. Die Transportriemen fassen die Folie dabei an ihren seitlichen Randbereichen. Durch den Dehnvorgang der Folie, der durch die Bewegung zumindest einer Riemenfördereinrichtung in Richtung senkrecht zur Folientransportrichtung ausgelöst wird, wird die Dehnfolie auseinandergezogen. Das heißt, die Riemen müssen die Dehnfolie so stark zwischen einander einklemmen, dass die Dehnfolie nicht zwischen den Riemen hervor rutscht, selbst wenn durch den Dehnvorgang die Dehnfolie unter mechanische Spannung gesetzt wird. Durch diesen Vorgang entsteht Folienabrieb. Die Partikel, die den Abrieb bilden, bleiben an den Transportriemen haften. In anderen Worten bleiben an den Transportriemen durch wiederholtes Verpacken mit der Verpackungsmaschine Partikel der Dehnfolie hängen. Ebenso können bei der Übergabe der Folie vom Folienführungselement in die Folientransportvorrichtung kleine Beschädigungen an der oberen Kante der Folie auftreten, die dazu führen, dass kleine Folienteile von der Folie abreisen. Diese kleinen Folienteile bleiben ebenfalls an den Transportriemen haften. Bei längerem Betrieb der Verpackungsmaschine führen der Folienabrieb und die kleinen Folienteile dazu, dass die Transportriemen nicht mehr genug Reibung aufbringen, um die Folie während des Dehnvorgangs zu halten. Ein Herausrutschen der Dehnfolie aus den Transportriemen, wenn eine Riemenfördereinrichtung in Richtung senkrecht zur Folientransportrichtung bewegt wird, ist die Folge. Des Weiteren kann die Dehnfolie, beim synchronen Bewegen der Transportriemen der Riemenfördereinrichtungen, in mindestens einer Riemenfördereinrichtung Schlupf entwickeln, sodass die Dehnfolie zumindest in einer Riemenfördereinrichtung einen Stau bildet und Falten aufwirft. Beide Effekte können einzeln und insbesondere, wenn sie gleichzeitig auftreten, zu einer Fehlfunktion der Verpackungsmaschine führen.

Außerdem weisen die Transportriemen eine raue Oberfläche auf. Durch wiederholtes aneinander reiben der Transportriemen beim synchronen bewegen wird diese Oberfläche, die durch die Gewebestruktur der Transportriemen bedingt ist, mit der Zeit glatter. Dieser Effekt ist unerwünscht, da dadurch die Reibung zwischen Transportriemen und Dehnfolie reduziert wird.

Die Reinigungsvorrichtung, die während des Betriebs über die Transportriemen streicht, streift den Abrieb und die kleinen Folienteile von den Transportriemen ab. Gleichzeitig wird die Gewebestruktur am Transportriemen wieder aufgeraut. Dies ist so zu verstehen, dass die Reinigungsvorrichtungen durch Streifen über die Transportriemen der Glättung der Transportriemen entgegenwirken. Dies ist nicht so zu verstehen, dass die Reinigungsvorrichtungen ähnlich wie Schleifpapier Material von den Transportriemen abtragen. Ein Transportriemen besteht an seiner Oberfläche aus Fasern, die durch den Transportprozess glatt gedrückt werden. Die Reinigungsvorrichtung stellt diese Fasern wieder auf, so dass die raue Oberfläche des Transportriemens erhalten bleibt bzw. wiederhergestellt wird. Aufgrund all dieser Effekte erhält die Reinigungsvorrichtung die Reibung zwischen Folie und Transportriemen und stellt die fehlerfreie Funktion der Verpackungsmaschine ohne separate manuelle Wartung der Transportriemen sicher.

In einer Ausführungsform sind die Reinigungsvorrichtungen in Folientransportrichtung am Ende eines Folientransportweges angebracht.

Die Reinigungsvorrichtungumfasst ein Reinigungselement, das in direktem Kontakt mit der Oberfläche des Transportriemens steht, die beim Folientransport die dehnbare Folie berührt. Das Reinigungselement streicht über die Seite des Transportriemens, die direkten Kontakt zur Dehnfolie hat. In einer Ausführungsform ist das Reinigungselement im Bereich einer Umlenkrolle der Riemenfördereinrichtung angebracht. Im Bereich der Umlenkrolle berührt das Reinigungselement die Oberfläche des Transportriemens. Im Bereich der Umlenkrolle bildet die Seite des Transportriemens, der mit der Dehnfolie in Kontakt ist, einen Außenradius. Ist die Schmutzseite des Transportriemens nach außen gebogen und über die Umlenkrolle stabil geführt, so findet der größte Reinigungseffekt statt. Das Reinigungselement kann die größte Reibung aufbauen. Durch das Biegen des Transportriemens ist ein Ablösen des Folienabriebs und der Folienteilchen besonders einfach.

In einer Ausführungsform ist das Reinigungselement als Schaber ausgebildet. Der Schaber hat eine gekrümmte Form. Die Richtung der Krümmung des Schabers entspricht der Richtung der Krümmung der Umlenkrolle. In anderen Worten heißt das, dass die Krümmung des Schabers und die Krümmung der Umlenkrolle parallel verlaufen, wenngleich Schaber und Umlenkrolle nicht äquidistant angeordnet sind. In einer Ausführungsform ist der Radius der Krümmung der Außenkante des Schabers kleiner als der Radius der Umlenkrolle. In einer Ausführungsform ist der Schaber konkav ausgebildet.

In einer Ausführungsform ist das Reinigungselement federbelastet. Die Feder drückt das Reinigungselement gegen den Transportriemen und/oder gegen die Umlenkrolle.

In einer Ausführungsform ist das Reinigungselement über eine Drehachse mit der Riemenfördereinrichtung verbunden. Eine Feder, insbesondere eine Spiralfeder, bewegt bzw. drückt das Reinigungselement auf der Drehachse in Richtung einer Federkraft, so dass das Reinigungselement gegen den Transportriemen und/oder gegen die Umlenkrolle gedrückt wird.

In einer Ausführungsform ist das Reinigungselement bezüglich des Transportriemens derart angeordnet, dass die Halterung des Reinigungselements an der Riemenfördereinrichtung in Transportrichtung des Transportriemens dem Berührungspunkt zwischen Transportriemen und Reinigungselement nachfolgt. Das heißt, der Schaber drückt an seinem Berührungspunkt mit dem Transportriemen gegen die Bewegung des Transportriemens und zieht nicht entgegen der Bewegung des Transportriemens.

In einer Ausführungsform läuft die longitudinale Erstreckung des Reinigungselements im Wesentlichen der Tangente des Transportriemens in Transportrichtung am Berührungspunkt zwischen Reinigungselement und Transportriemens entgegen. Es ist darauf zu achten, dass die Tangente des Transportriemens der Tangente der Umlenkrolle entspricht, die am Berührungspunkt des Transportriemens und der Umlenkrolle mit dem Schaber angelegt ist. Allerdings sind diese Tangente und die longitudinale Erstreckung des Reinigungselements nicht gleich. Sie verlaufen lediglich in die gleiche Richtung, sind also im Wesentlichen gleich. Außerdem haben sie eine entgegengesetzte Ausrichtung. Im Wesentlichen gleich in diesem Zusammenhang soll eine Abweichung von einem Winkel von unter 20 Grad miteinschließen. Die longitudinale Richtung des Schabers ist nicht in radialer Richtung oder annähernd radialer Richtung der Umlenkrolle.

In einer Ausführungsform weist das Reinigungselement an der Stelle, die zur Berührung mit dem Transportriemen und/oder der Umlenkrolle ausgebildet ist, einen spitzen Winkel von vorzugsweise kleiner 15° auf. So findet ein effektives Abkratzen von Folienabrieb und Aufrauen des Transportriemens statt.

In einer Ausführungsform weist das Reinigungselement eine Markierung auf, die eine Verschleißgrenze des Reinigungselements anzeigt. Ist das Reinigungselement durch den Betrieb der Verpackungsmaschine soweit abgenutzt, dass das Reinigungselement selbst bis zur Markierung abgetragen ist, so muss es ausgetauscht werden. Das Reinigungselement ist ein Verschleißteil.

In einer Ausführungsform weist die Umlenkrolle einen Kontaktsensor auf. Der Kontaktsensor sendet ein Störsignal, falls das Reinigungselement nicht den Kontaktsensor berührt und/oder ein Betriebssignal, falls das Reinigungselement den Kontaktsensor berührt.

Einige Ausführungsformen der Erfindung sind in den Zeichnungen beispielhaft gezeigt und nachfolgend beschrieben. Es zeigen, jeweils in schematischer Darstellung:
- Fig. 1: eine isometrische Vorderansicht einer Verpackungsmaschine zum Verpacken von Verpackungsgütern,
- Fig. 2: eine isometrische Vorderansicht eines Ausschnitts der Verpackungsmaschine mit Riemenfördereinrichtungen und einem Folienführungselement von schräg oben,
- Fig. 3: eine Seitenansicht von einer Riemenfördereinrichtung,
- Fig. 4: eine isometrische Ansicht des hinteren Bereichs einer Riemenfördereinrichtung,
- Fig. 5: eine isometrische Seitenansicht des hinteren Bereichs einer Riemenfördereinrichtung,
- Fig. 6: eine isometrische Ansicht einer Reinigungsvorrichtung für einen Transportriemen,
- Fig. 7: eine isometrische Ansicht von vorne einer Reinigungsvorrichtung für einen Transportriemen,
- Fig. 8: eine Explosionszeichnung einer Reinigungsvorrichtung, und
- Fig. 9: eine isometrische Ansicht eines Reinigungselements, das als Schaber ausgebildet ist.

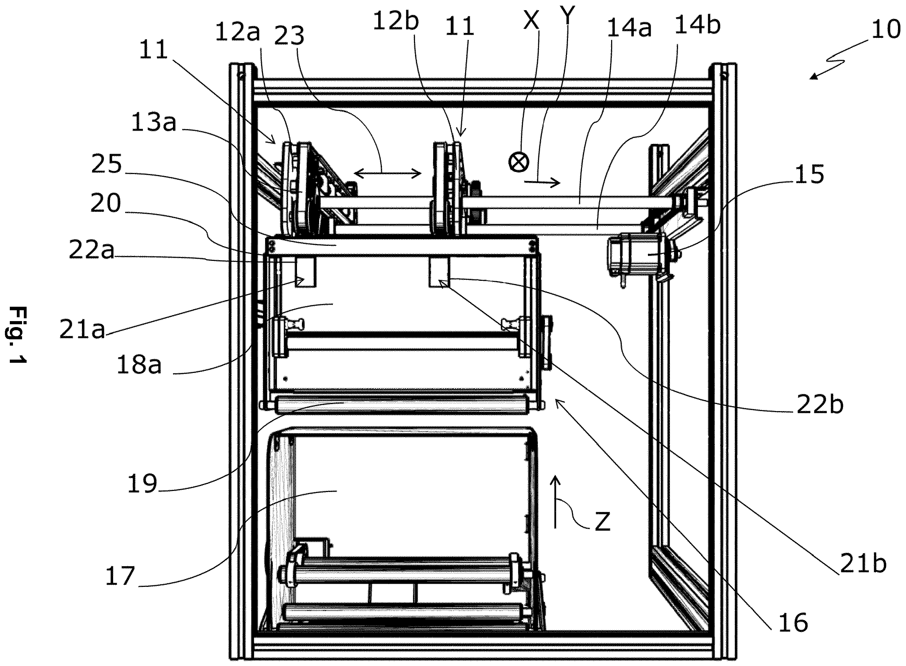

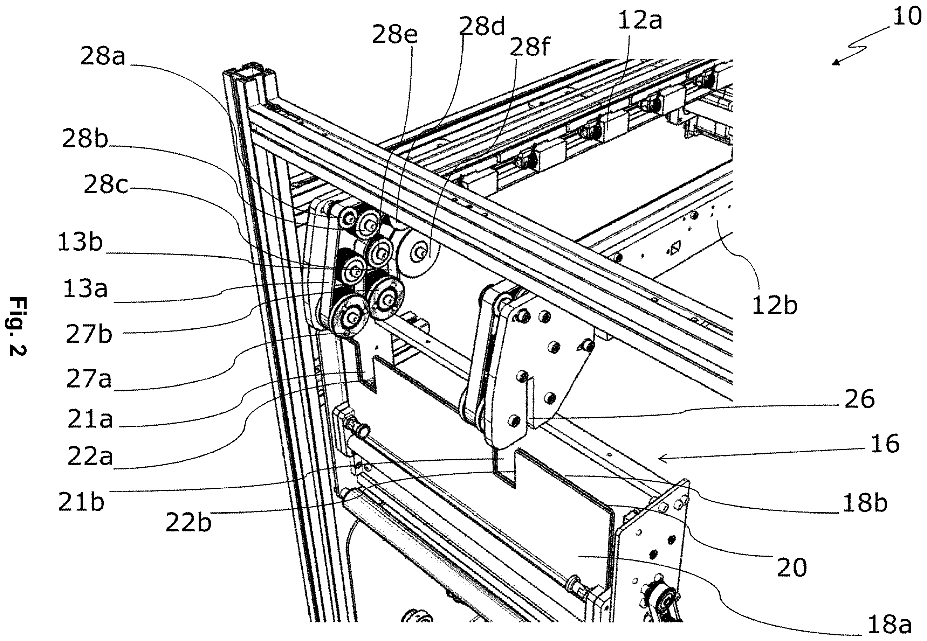

Fig. 1 zeigt eine isometrische Vorderansicht auf eine erfindungsgemäße Verpackungsmaschine 10 zum Verpacken von Verpackungsgütern (nicht gezeigt) mittels einer dehnbaren Folie (ebenfalls nicht gezeigt). Die Verpackungsmaschine verfügt über eine Folientransportvorrichtung 11 zur Folienzuführung zu einem zu verpackenden Verpackungsgut. Eine erste Riemenfördereinrichtung 12a und eine zweite Riemenfördereinrichtung 12b zum Transport der Folie bilden Bestandteile der Folientransportvorrichtung 11. Die erste und die zweite Riemenfördereinrichtung 12a, 12b haben jeweils einen ersten und einen zweiten Transportriemen 13a, 13b (siehe Fig. 2). Die Transportriemen 13a, 13b sind in einer durch die Folientransportvorrichtung 11 vorgegebenen Folientransportrichtung X (in der Fig. 1 in die Papierebene hinein, dargestellt durch ein Kreuz) synchron angetrieben und nebeneinander angeordnet. Die zweite Riemenfördereinrichtung 12b ist in einer Richtung Y senkrecht zu der Folientransportrichtung X durch Spindeln 14a, 14b und einen Spindelmotor 15 bewegbar. Mit einem in vertikaler Richtung Z bewegbaren Folienführungselement 16 der Verpackungsmaschine 10 ist die Folie aus einer Folienspendeeinrichtung 17 in die Folientransportvorrichtung 11 einführbar. Der Begriff "vertikal" bezieht sich insbesondere auf die Richtung parallel zur Schwerkraft. Die Folienspendeneinrichtung 17 ist unterhalb des Folienführungselements 16 und die Folientransportvorrichtung 11 oberhalb des Folienführungselements 16 ausgebildet. Das Folienführungselement 16 verfügt über eine erste Führungsplatte 18a und eine zweite Führungsplatte 18b (s. Fig. 2). Die Führungsplatten 18a, 18b sind vertikal ausgerichtet. Über eine Umlenkrolle 19 des Folienführungselements 16 am unteren Ende des Folienführungselements 16 ist die Folie zwischen die Führungsplatten 18a, 18b einführbar.

In einer in vertikaler Richtung Z den Riemenfördereinrichtungen 12a, 12b zugewandten, oberen Kante 20 der Führungsplatte 18a sind eine erste Ausnehmung 21a sowie eine zweite Ausnehmung 21b ausgebildet. Das Folienführungselement 16 ist in vertikaler Richtung Z bewegbar. Dadurch ist die Führungsplatte 18a auf Höhe der Riemenfördereinrichtungen bewegbar. Dabei umgreift die Umrandung 22a der ersten Ausnehmung die erste Riemenfördereinrichtung 12a. Die Umrandung 22b der zweiten Ausnehmung 21b umgreift die zweite Riemenfördereinrichtung 12b. Der Abstand 23 zwischen den beiden Riemenfördereinrichtungen 12a, 12b entspricht somit bei der Folienübergabe dem Abstand zwischen den beiden Ausnehmungen 21a, 21b. Dadurch werden die Riemenfördereinrichtungen 12a, 12b in die Ausnehmungen 21a, 21b eingeführt.

In vertikaler Richtung unterhalb der Riemenfördereinrichtungen ist eine Folienschneideinrichtung 25 angeordnet. Die Folie wird durch die Riemenfördereinrichtungen 12a, 12b transportiert, bis die Folie eine ausreichende Länge gemessen ab der Folienschneidreinrichtung 25 für den gewünschten Verpackungsvorgang hat. Dann wird das Folienführungselement 16 mit den Führungsplatten 18a, 18b in vertikaler Richtung nach unten, auf die Folienspendeeinrichtung 17 zu bewegt. Die Führungsplatte 18a, 18b des Folienführungselements 16 verlassen somit die Folienschneideinrichtung 25. Die Folienschneideinrichtung 25 schneidet dann durch die Folie hindurch. Die abgeschnittene Folie wird dann durch die Riemenfördereinrichtungen 12a, 12b weiter transportiert, bis der abgeschnittene Teil der Folie in horizontaler Ausrichtung in einer Position vertikal oberhalb eines Hubtisches (nicht gezeigt) angeordnet ist. Der Hubtisch wird später das Verpackungsgut in vertikaler Richtung bewegen. Somit ist der abgeschnittene Teil der Folie vertikal über dem Verpackungsgut zwischen den Riemenfördereinrichtungen 12a, 12b angeordnet. Die Folie wird durch eine Bewegung der Riemenfördereinrichtung 12b in der Richtung Y senkrecht zu der Folientransportrichtung X gedehnt. Ein Verpackungsgut, zum Beispiel eine Trayschale, kann durch eine Verpackungsguttransportvorrichtung (nicht gezeigt) an die Folie zwischen den Transportriemen 13a, 13b herangeführt werden. Eine solche Verpackungsguttransportvorrichtung kann ein Zuführförderband und einen Hubtisch umfassen, wie in der oben zitierten EP 3 093 244 B1 dargestellt. Bei dem Heranführen des Verpackungsguts an die Folie durch einen Hubvorgang legt sich die Folie um das Verpackungsgut. Durch Faltzangen (nicht gezeigt) kann die Folie um das Verpackungsgut herumgeschlagen werden. Anschließend kann das Verpackungsgut durch einen Pusher (nicht gezeigt) auf eine Siegelplatte geschoben werden, auf der die Folie verschweißt wird, und schließlich durch ein Förderband abtransportiert werden, wie in der EP 3 093 244 B1 angeführt.

Die Fig. 2 zeigt eine isometrische Vorderansicht eines Ausschnitts der Verpackungsmaschine 10 mit den Riemenfördereinrichtungen 12a, 12b und des Folienführungselements 16 von schräg oben. Zur besseren Übersicht ist in Fig. 2 die Folienschneideinrichtung 25 nicht gezeigt. Insbesondere sind die erste und zweite Führungsplatte 18a, 18b des Folienführungselements 16 dargestellt, zwischen denen die Folie transportiert wird. Die Riemenfördereinrichtungen 12a, 12b haben Ausnehmungen 26 für die obere Kante 20 der Führungsplatten 18a, 18b. Im in die Ausnehmungen 21a, 21b eingeführten Zustand der Riemenfördereinrichtungen 12a, 12b umgreifen die Umrandungen 22a, 22b der Ausnehmungen 21a, 21b die Riemenförderungen 12a, 12b. Die Transportriemen 13a, 13b werden jeweils durch eine endseitig in den Transportriemen 13a, 13b angeordnete Umlenkrolle 27a, 27b geführt. Den Umlenkrollen 27a, 27b sind in Folientransportrichtung X eine erste, zweite, dritte, vierte, fünfte und sechste Führungsrolle 28a, 28b, 28c, 28d, 28e, 28f zur Führung der Transportriemen 13a, 13b nachgelagert.

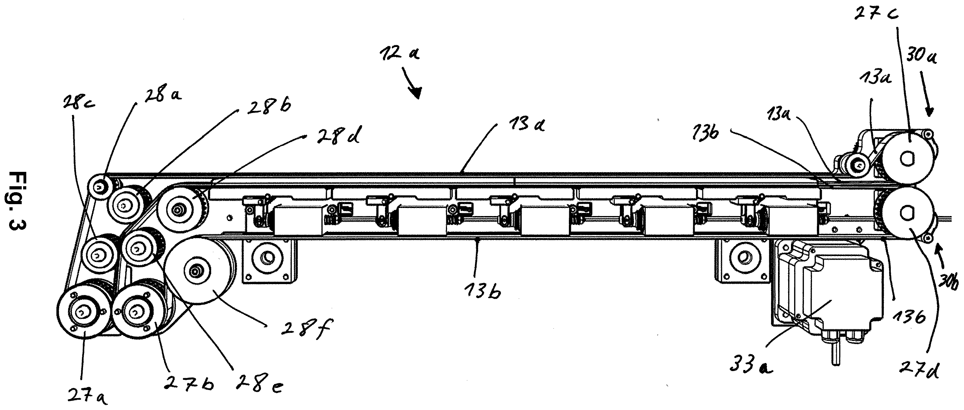

Die Fig. 3 zeigt eine Seitenansicht der ersten Riemenfördereinrichtung 12a. Die Transportriemen 13a, 13b werden jeweils durch eine endseitig in den Transportriemen 13a, 13b angeordnete Umlenkrolle 27a, 27b geführt. Den Umlenkrollen 27a, 27b sind in Folientransportrichtung X eine erste, zweite, dritte, vierte, fünfte und sechste Führungsrolle 28a, 28b, 28c, 28d, 28e, 28f zur Führung der Transportriemen 13a, 13b nachgelagert. Auf dieser Seite wird die Folie über das bewegbare Folienführungselement 16 in den Spalt zwischen den Transportriemen übergeben. Die Transportriemen 13a, 13b werden in Folientransportrichtung X am Ende der ersten Riemenfördereinrichtung 12a über Umlenkrollen 27c, 27d umgelenkt. Ein Antriebsmotor 33a treibt über ein Getriebe (nicht gezeigt) die Umlenkrollen 27c, 27d synchron an. Die Umlenkrollen 27c, 27d treiben die Transportriemen 13a, 13b an. Die Transportriemen 13a, 13b sind als Zahnriemen ausgeführt, wobei die Zähne der Transportriemen 13a, 13b in Zahnräder eingreifen, die in den Umlenkrollen 27c, 27d integriert sind. Die Transportriemen 13a, 13b bestehen aus einem flexiblen Gewebe, dessen Oberfläche, die mit der Folie in Berührung kommt, rau ist. Die Oberfläche besteht aus Fasern, die etwas vom Trum des Transportriemens 13a, 13b abstehen. Im Bereich der Umlenkrollen 27c, 27d in Folientransportrichtung X am Ende der ersten Riemenfördereinrichtung 12a befinden sich Reinigungsvorrichtungen 30a, 30b für die Transportriemen 13a, 13b. Die zweite Riemenfördereinrichtung 12b ist zur ersten Riemenfördereinrichtung 12a symmetrisch aufgebaut.

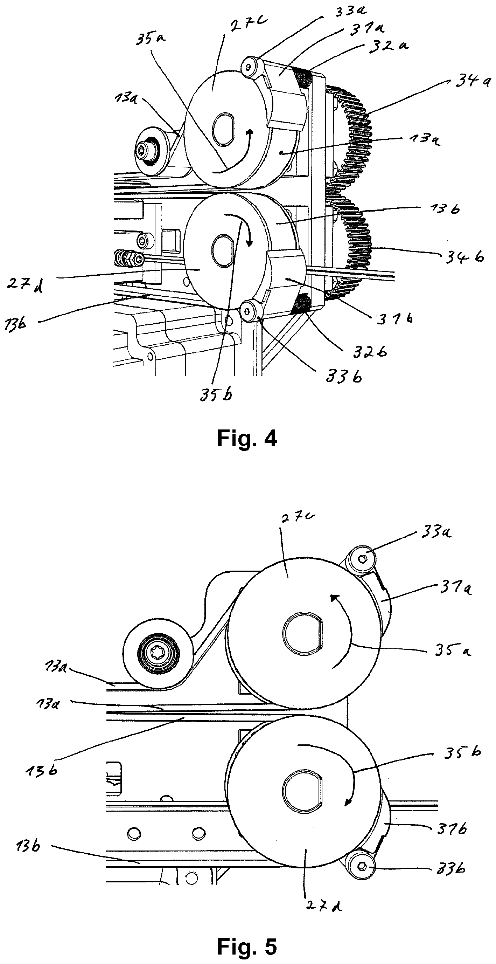

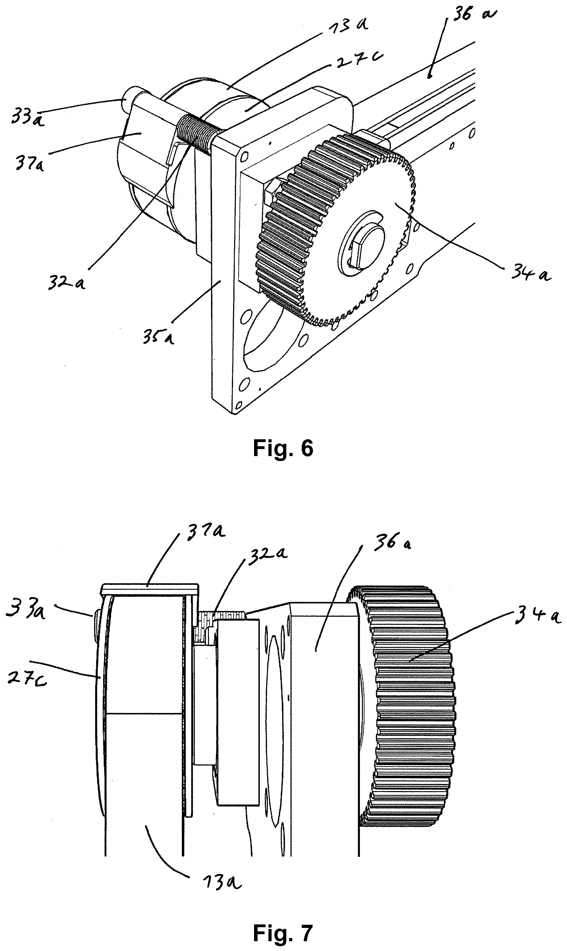

Die Fig. 4 und 5 zeigen eine isometrische Vorderansicht und eine isometrische Seitenansicht des in Folientransportrichtung X Endbereichs der ersten Riemenfördereinrichtung 12a. Die Fig. 6 zeigt eine isometrische Ansicht der Umlenkrolle 27c und einer Reinigungsvorrichtung 30a für den ersten Transportriemen 13a. Die Fig. 7 zeigt eine Seitenansicht in tangentialer Richtung des ersten Transportriemens 13a an der Umlenkrolle 27c. Die Umlenkrollen 27c, 27d lenken die Transportriemen 13a, 13b um. Die Umlenkrollen werden über die Zahnräder 34a, 34b von einem Motor 33a angetrieben. Die erste Umlenkrolle 27c führt den ersten Transportriemen 13a und ist durch das erste Zahnrad 34a angetrieben. Die zweite Umlenkrolle 27d führt den zweiten Transportriemen 13b und ist durch das zweite Zahnrad 34b angetrieben. Die beiden Umlenkrollen 27c, 27d drehen sich synchron in gegenläufigen Drehrichtungen 35a, 35b. So treiben die beiden Umlenkrollen die Transportriemen 13a, 13b synchron an. Die Reinigungsvorrichtungen 30a, 30b bestehen aus einem Schaber 31a, 31b, der über einen Bolzen 33a, 33b drehbar mit dem Rahmen 36a der ersten Riemenfördereinrichtung 12a verbunden ist. Eine Feder 32a, 32b drückt den Schaber 31a, 31b in Drehrichtung um den Bolzen 33a, 33b gegen den Rand der Umlenkrolle 27c, 27d. Der Bolzen 33a, 33b ist zum Beispiel eine Schraube. Der Schaber ist länglich geformt und weist eine Krümmung auf. Der Schaber ist in seinem Bereich, in dem er die Umlenkrolle 27c, 27d berührt, spitz zulaufend und berührt den Transportriemen 13a, 13b sowie die Ränder der Umlenkrolle 27c, 27d, zwischen denen der Transportriemen 13a, 13b läuft. Die Ränder der Umlenkrolle 27c, 27d und der Transportriemen 13a, 13b sind in ihrer radialen Höhe bündig, so dass die Kante des Schabers 31a sowohl auf dem Transportriemen 13a, 13b als auch auf den Rändern der Umlenkrolle 27c, 27d aufliegt (Fig. 7).

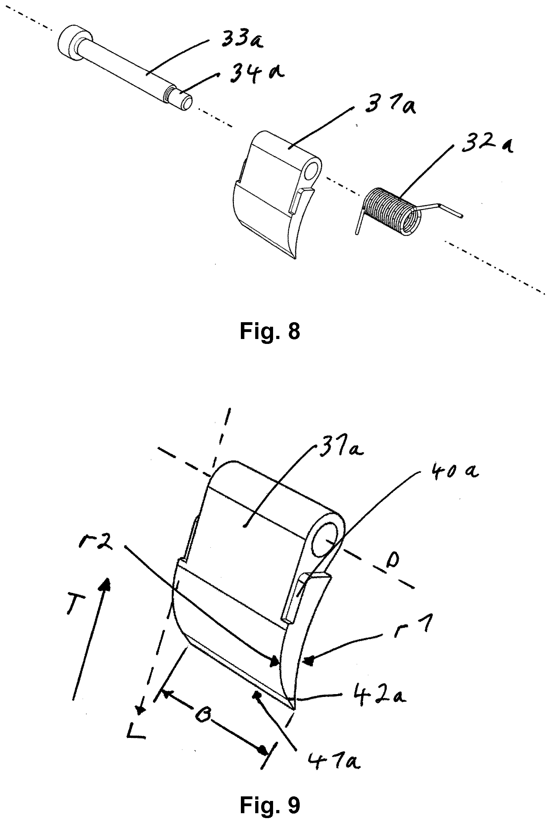

Die Fig. 8 zeigt eine Explosionszeichnung einer Reinigungsvorrichtung 30a. Die Reinigungsvorrichtung 30a besteht aus einem Schaber 31a, der auf eine Schraube 33a aufgesteckt ist. Die Schraube 33a bildet eine Drehachse für den Schaber 33a. Eine Feder 32a übt eine Kraft auf den Schaber 31a aus und drückt ihn in Richtung der Umlenkrolle 27c. Die Feder 32a ist als Spiralfeder ausgebildet und ist ebenfalls auf die Schraube aufgesteckt. Ein Ende der Feder 32a übt die Kraft an einer Federaufnahme auf den Schaber aus. Das andere Ende der Feder 32a ist an dem Rahmen 36a der Riemenfördereinrichtung 12a abgestützt. Die Schraube 33a hat an ihrem Ende ein Gewinde 34a, mit dem die Reinigungsvorrichtung 30a am Rahmen 36a der Riemenfördereinrichtung 12a verschraubt ist.

Die Fig. 9 zeigt den Schaber 31a. Der Schaber 31a ist drehbar auf eine Schraube 33a (Bolzen) aufgesteckt und dreht sich um die Drehachse D. Dabei ist die Drehrichtung des Schabers 31a durch die Umlenkrolle 27c und den Transportriemen 13a beschränkt, die als Anschlag dienen. Der Schaber 31a umfasst eine Federaufnahme 40, an der die Spiralfeder 32a angreift. Der Schaber hat einen Berührungsbereich 41a, der als glatte Kante ausgebildet ist und mit dem der Schaber 31a den Transportriemen 13a und die Ränder der Umlenkrolle 27c berührt. Der Schaber 31a ist länglich ausgebildet und hat eine longitudinale Richtung L, die im Wesentlichen durch die Richtung des Schabers 31a gebildet ist. Wie in Fig. 4 bis 7 gezeigt, greift der Schaber 31a an der Umlenkrolle 27c derart an, dass die Tangente der Umlenkrolle und somit die Tangente des Transportriemens 13a an dem Punkt, an dem der Schaber die Umlenkrolle 27c und den Transportriemen 13a berührt, im Wesentlichen parallel zur longitudinalen Richtung L des Schabers 31a ist. Der Schaber ist derart angeordnet, dass die Tangente T des Transportriemens 13a in Bewegungsrichtung des Transportriemens 13a der longitudinalen Richtung L des Schabers entgegenläuft.

Der Schaber 31a hat eine Breite B. Des Weiteren hat der Schaber 31a in seiner vorderen Hälfte, die der Umlenkrolle 27c näher ist, einen Innenradius r1, der im Wesentlichem dem Radius der Umlenkrolle 27c entspricht. Der Schaber hat in diesem Bereich einen Außenradius r2, der kleiner ist als der Radius der Umlenkrolle 27c. Somit gilt r2 < r1, was die wesentliche Form der vorderen Hälfte des Schabers 31a definiert. Die hintere Hälfte des Schabers 31a, in der sich dessen Drehachse befindet, ist im Wesentlich gerade geformt. Der Schaber 31a hat im Berührungsbereich eine Markierung 42a. Der Berührungsbereich 41a des Schabers nutzt sich durch ständige Reibung mit dem rauen Transportriemen 13a ab, so dass Verschleißerscheinungen auftreten. Ist der Schaber 31a bis zur Markierung 42a abgenutzt, so muss der Schaber 31a gewechselt werden. Die zweite Reinigungsvorrichtung 30b für den zweiten Transportriemen 13b ist entsprechend der ersten Reinigungsvorrichtung 30a für den ersten Transportriemen 13a ausgebildet.

Die vordere Kante des Schabers 31a, der den Berührungsbereich 41a des Schabers 31a bildet, hat einen spitzen Winkel kleiner 15°. Die Bewegung des Transportriemens 13a streift den Transportriemen 13a in Bewegungsrichtung gegen diese vordere Kante. Die Feder 32a drückt dabei die vordere Kante des Schabers 31a in Richtung Transportriemen 13a. Dadurch raut der Schaber 31a den Transportriemen 13a auf und streift Folienabrieb und kleine Folienteile ab. Durch die Bewegung des Transportriemens 13a auf den Schaber 31a zu, führt die Reibung zwischen Schaber 31a und Transportriemen 13a dazu, dass der Schaber 31a in Richtung des Transportriemens 13a gezogen wird. Dieser Vorteil könnte nicht realisiert werden, wenn der Transportriemen 13a sich in umgekehrter Richtung bewegen würde und an der vorderen Kante des Schabers 31a ziehen würde.

Die Form des Schabers 31a, der als Reinigungselement dient, mit dem Innenradius r1, der im Wesentlichen dem Radius der Umlenkrolle 27c entspricht und dem Außenradius r2, der kleiner als der Innenradius r1 ist, unterstützt diesen Effekt.

Die Funktionen verschiedener in den Zeichnungen gezeigter Elemente, inklusive der Funktionsblöcke, können durch dezidierte Hardware oder durch generische Hardware, die in der Lage ist Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

## Patentansprüche

1. Verpackungsmaschine (10) zum Verpacken von Verpackungsgütern mittels einer dehnbaren Folie, mit einer Folientransportvorrichtung (11) zur Folienzuführung zu einem zu verpackenden Verpackungsgut, die eine erste und eine zweite Riemenfördereinrichtung (12a, 12b) zum Transport der Folie aufweist, wobei die Riemenfördereinrichtungen (12a, 12b) jeweils einen ersten und einen zweiten Transportriemen (13a, 13b) umfassen, die in einer durch die Folientransportvorrichtung (11) vorgegebenen Folientransportrichtung (X) synchron angetrieben und nebeneinander angeordnet sind, wobei zumindest die zweite Riemenfördereinrichtung (12b) in einer Richtung (Y) senkrecht zu der Folientransportrichtung (X) bewegbar ist, und mit einem bewegbaren Folienführungselement (16), mit dem die Folie in die Folientransportvorrichtung (11) einführbar ist, wobei das Folienführungselement (16) eine Führungsplatte (18a, 18b) zur Führung der Folie umfasst, die in einer den Riemenfördereinrichtungen (12a, 12b) zugewandten, in vertikaler Richtung (Z) oberen Kante (20) eine erste Ausnehmung (21a) sowie eine zweite Ausnehmung (21b) aufweist, wobei die erste Riemenfördereinrichtung (12a) in die erste Ausnehmung (21a) und die zweite Riemenfördereinrichtung (12b) in die zweite Ausnehmung (21b) einführbar ist,
**dadurch gekennzeichnet, dass** die Folientransportvorrichtung (11) Reinigungsvorrichtungen (30a, 30b) für die Riemenfördereinrichtungen (12a, 12b) aufweist und dass eine Reinigungsvorrichtung (30a, 30b) ein Reinigungselement (31a, 31b) umfasst, das in direktem Kontakt mit der Oberfläche eines Transportriemens (13a, 13b) steht, die beim Folientransport die dehnbare Folie berührt.

2. Verpackungsmaschine (10) zum Verpacken von Verpackungsgütern mittels einer dehnbaren Folie nach Anspruch 1, **dadurch gekennzeichnet**, das die Folientransportvorrichtung (11) eine erste Reinigungsvorrichtung (30a, 30b) für die erste Riemenfördereinrichtung (12a) und eine zweite Reinigungsvorrichtung (30a, 30b) für die zweite Riemenfördereinrichtung (12b) umfasst.

3. Verpackungsmaschine (10) zum Verpacken von Verpackungsgütern mittels einer dehnbaren Folie nach Anspruch 1 oder 2, **dadurch gekennzeichnet, dass** jede Riemenfördereinrichtung (12a, 12b) eine erste Reinigungsvorrichtung (30a) für den ersten Transportriemen (13a) und eine zweite Reinigungsvorrichtung (30b) für den zweiten Transportriemen (13b) umfasst.

4. Verpackungsmaschine (10) zum Verpacken von Verpackungsgütern mittels einer dehnbaren Folie nach einem der Ansprüche 1 bis 3, **dadurch gekennzeichnet, dass** die Reinigungsvorrichtungen (30a, 30b) in Folientransportrichtung (X) am Ende eines Folientransportweges angebracht sind.

5. Verpackungsmaschine (10) zum Verpacken von Verpackungsgütern mittels einer dehnbaren Folie nach einem der Ansprüche 1 bis 4, **dadurch gekennzeichnet, dass** ein Reinigungselement (31a, 31b) im Bereich einer Umlenkrolle (27c, 27d) die Oberfläche des Transportriemens berührt.

6. Verpackungsmaschine (10) zum Verpacken von Verpackungsgütern mittels einer dehnbaren Folie nach Anspruch 5, **dadurch gekennzeichnet, dass** das Reinigungselement (31a, 31b) als Schaber ausgebildet ist, der eine gekrümmte Form hat und die Richtung seiner Krümmung der Richtung der Krümmung der Umlenkrolle (27c, 27d) entspricht, wobei insbesondere der Radius (r2) der Krümmung der Außenkante des Schabers kleiner ist als der Radius der Umlenkrolle (27c, 27d).

7. Verpackungsmaschine (10) zum Verpacken von Verpackungsgütern mittels einer dehnbaren Folie nach Anspruch 5 oder 6, **dadurch gekennzeichnet, dass** das Reinigungselement (31a, 31b) federbelastet gegen den Transportriemen und/oder gegen die Umlenkrolle (27c, 27d) gerückt wird.

8. Verpackungsmaschine (10) zum Verpacken von Verpackungsgütern mittels einer dehnbaren Folie nach Anspruch 7, **dadurch gekennzeichnet, dass** das Reinigungselement (31a, 31b) über eine Drehachse (D) mit der Riemenfördereinrichtung (12a, 12b) verbunden ist und eine Feder (32a, 32b), insbesondere eine Spiralfeder, das Reinigungselement (31a, 31b) auf der Drehachse (D) in Richtung einer Federkraft bewegt, so dass das Reinigungselement (31a, 31b) gegen den Transportriemen (13a, 13b) und/oder gegen die Umlenkrolle (27c, 27d) gedrückt wird.

9. Verpackungsmaschine (10) zum Verpacken von Verpackungsgütern mittels einer dehnbaren Folie nach einem der Ansprüche 1 bis 8, **dadurch gekennzeichnet, dass** das Reinigungselement (31a) bezüglich des Transportriemens (13a, 13b) derart angeordnet ist, dass die Halterung (33a, 33b) des Reinigungselements (31a, 31b) an der Riemenfördereinrichtung (12a, 12b) in Transportrichtung des Transportriemens (13a, 13b) dem Berührungspunkt zwischen Transportriemen (13a, 13b) und Reinigungselement (31a, 31b) nachfolgt.

10. Verpackungsmaschine (10) zum Verpacken von Verpackungsgütern mittels einer dehnbaren Folie nach einem der Ansprüche 1 bis 9, **dadurch gekennzeichnet, dass** die Richtung der longitudinalen Erstreckung (L) des Reinigungselements (31a, 31b) im Wesentlichen der Tangente (T) des Transportriemens (13a, 13b) in Transportrichtung am Berührungspunkt zwischen Reinigungselement (31a) und Transportriemen (13a, 13b) entgegenläuft.

11. Verpackungsmaschine (10) zum Verpacken von Verpackungsgütern mittels einer dehnbaren Folie nach einem der Ansprüche 1 bis 10, **dadurch gekennzeichnet, dass** das Reinigungselement an der Stelle, die zur Berührung mit dem Transportriemen und/oder der Umlenkrolle ausgebildet ist, einen spitzen Winkel von vorzugsweise kleiner 15° umfasst.

12. Verpackungsmaschine (10) zum Verpacken von Verpackungsgütern mittels einer dehnbaren Folie nach einem der Ansprüche 1 bis 11, **dadurch gekennzeichnet, dass** das Reinigungselement eine Markierung (42a) aufweist, die eine Verschleißgrenze des Reinigungselements (31a, 31b) anzeigt.

13. Verpackungsmaschine (10) zum Verpacken von Verpackungsgütern mittels einer dehnbaren Folie nach einem der Ansprüche 1 bis 12, **dadurch gekennzeichnet, dass** die Umlenkrolle einen Kontaktsensor aufweist, wobei der Kontaktsensor ein Störsignal sendet, falls das Reinigungselement nicht den Kontaktsensor berührt und/oder ein Betriebssignal sendet, falls das Reinigungselement den Kontaktsensor berührt.

## Claims

1. Packaging machine (10) for packaging goods to be packaged by means of a stretchable film, having a film transport device (11) for the supply of film to goods to be packaged, which has a first and a second belt conveyor device (12a, 12b) for transporting the film, wherein the belt conveyor devices (12a, 12b) each comprise a first and a second transport belt (13a, 13b), which are driven synchronously in a film transport direction (X) predefined by the film transport device (11) and are arranged beside each other, wherein at least the second belt conveyor device (12b) can be moved in a direction (Y) at right angles to the film transport direction (X), and having a movable film guide element (16), with which the film can be inserted into the film transport device (11), wherein the film guide element (16) comprises a guide plate (18a, 18b) for guiding the film, which has a first recess (21a) and a second recess (21b) in an upper edge (20) facing the belt conveyor devices (12a, 12b) in the vertical direction (Z), wherein the first belt conveyor device (12a) can be inserted into the first recess (21a) and the second belt conveyor device (12b) can be inserted into the second recess (21b),
**characterized in that**
the film transport device (11) has cleaning devices (30a, 30b) for the belt conveyor devices (12a, 12b), and **in that** a cleaning device (30a, 30b) comprises a cleaning element (31a, 31b) which is in direct contact with the surface of a transport belt (13a, 13b) which touches the stretchable film during the film transport.

2. Packaging machine (10) for packaging goods to be packaged by means of a stretchable film according to Claim 1, **characterized in that** the film transport device (11) comprises a first cleaning device (30a, 30b) for the first belt conveyor device (12a) and a second cleaning device (30a, 30b) for the second belt conveyor device (12b) .

3. Packaging machine (10) for packaging goods to be packaged by means of a stretchable film according to Claim 1 or 2, **characterized in that** each belt conveyor device (12a, 12b) comprises a first cleaning device (30a) for the first transport belt (13a) and a second cleaning device (30b) for the second transport belt (13b).

4. Packaging machine (10) for packaging goods to be packaged by means of a stretchable film according to one of Claims 1 to 3, **characterized in that** the cleaning devices (30a, 30b) are fitted at the end of a film transport path in the film transport direction (X).

5. Packaging machine (10) for packaging goods to be packaged by means of a stretchable film according to one of Claims 1 to 4, **characterized in that** a cleaning element (31a, 31b) touches the surface of the transport belt in the region of a deflection roller (27c, 27d).

6. Packaging machine (10) for packaging goods to be packaged by means of a stretchable film according to Claim 5, **characterized in that** the cleaning element (31a, 31b) is designed as a scraper, which has a curved shape and the direction of its curvature corresponds to the direction of curvature of the deflection roller (27c, 27d), wherein in particular the radius (r2) of the curvature of the outer edge of the scraper is smaller than the radius of the deflection roller (27c, 27d).

7. Packaging machine (10) for packaging goods to be packaged by means of a stretchable film according to Claim 5 or 6, **characterized in that** the cleaning element (31a, 31b) is pressed in a spring-loaded manner against the transport belt and/or against the deflection roller (27c, 27d).

8. Packaging machine (10) for packaging goods to be packaged by means of a stretchable film according to Claim 7, **characterized in that** the cleaning element (31a, 31b) is connected to the belt conveyor device (12a, 12b) via an axis of rotation (D), and a spring (32a, 32b), in particular a spiral spring, moves the cleaning element (31a, 31b) on the axis of rotation (D) in the direction of a spring force, so that the cleaning element (31a, 31b) is pressed against the transport belt (13a, 13b) and/or against the deflection roller (27c, 27d).

9. Packaging machine (10) for packaging goods to be packaged by means of a stretchable film according to one of Claims 1 to 8, **characterized in that** the cleaning element (31a) is arranged with respect to the transport belt (13a, 13b) in such a way that the holder (33a, 33b) of the cleaning element (31a, 31b) on the belt conveyor device (12a, 12b) follows the point of contact between the transport belt (13a, 13b) and cleaning element (31a, 31b) in the transport direction of the transport belt (13a, 13b).

10. Packaging machine (10) for packaging goods to be packaged by means of a stretchable film according to one of Claims 1 to 9, **characterized in that** the direction of the longitudinal extent (L) of the cleaning element (31a, 31b) runs substantially counter to the tangent (T) to the transport belt (13a, 13b) in the transport direction at the point of contact between the cleaning element (31a) and the transport belt (13a, 13b).

11. Packaging machine (10) for packaging goods to be packaged by means of a stretchable film according to one of Claims 1 to 10, **characterized in that** the cleaning element comprises an acute angle of preferably less than 15° at the point which is designed to contact the transport belt and/or the deflection roller.

12. Packaging machine (10) for packaging goods to be packaged by means of a stretchable film according to one of Claims 1 to 11, **characterized in that** the cleaning element has a marking (42a) which indicates a wear limit of the cleaning element (31a, 31b).

13. Packaging machine (10) for packaging goods to be packaged by means of a stretchable film according to one of Claims 1 to 12, **characterized in that** the deflection roller has a contact sensor, wherein the contact sensor transmits a fault signal if the cleaning element does not touch the contact sensor and/or transmits an operating signal if the cleaning element touches the contact sensor.

## Revendications

1. Machine d'emballage (10) permettant d'emballer des produits destinés à l'emballage au moyen d'un film étirable, comprenant un dispositif de transport de film (11) pour amener le film à un produit destiné à l'emballage à emballer et qui présente un premier et un deuxième convoyeur à courroie (12a, 12b) pour transporter le film, les convoyeurs à courroie (12a, 12b) comprenant respectivement une première et une deuxième courroie de transport (13a, 13b) qui sont entraînées de manière synchrone dans une direction de transport de film (X) prédéterminée par le dispositif de transport de film (11) et sont disposées côte à côte, au moins le deuxième convoyeur à courroie (12b) pouvant être déplacé dans une direction (Y) perpendiculaire à la direction de transport de film (X), et comprenant un élément de guidage de film mobile (16) qui permet d'introduire le film dans le dispositif de transport de film (11), l'élément de guidage de film (16) comprenant une plaque de guidage (18a, 18b) pour guider le film qui présente dans un bord (20) supérieur dans la direction verticale (Z) et tourné vers les convoyeurs à courroie (12a, 12b) un premier évidement (21a) ainsi qu'un deuxième évidement (21b), le premier convoyeur à courroie (12a) pouvant être introduit dans le premier évidement (21a) et le deuxième convoyeur à courroie (12b) pouvant être introduit dans le deuxième évidement (21b),
**caractérisée en ce que** le dispositif de transport de film (11) présente des dispositifs de nettoyage (30a, 30b) pour les convoyeurs à courroie (12a, 12b), et **en ce qu'**un dispositif de nettoyage (30a, 30b) comprend un élément de nettoyage (31a, 31b) qui est en contact direct avec la surface d'une courroie de transport (13a, 13b) qui touche le film étirable pendant le transport du film.

2. Machine d'emballage (10) permettant d'emballer des produits destinés à l'emballage au moyen d'un film étirable selon la revendication 1, **caractérisée en ce que** le dispositif de transport de film (11) comprend un premier dispositif de nettoyage (30a, 30b) pour le premier convoyeur à courroie (12a) et un deuxième dispositif de nettoyage (30a, 30b) pour le deuxième convoyeur à courroie (12b).

3. Machine d'emballage (10) permettant d'emballer des produits destinés à l'emballage au moyen d'un film étirable selon la revendication 1 ou 2, **caractérisée en ce que** chaque convoyeur à courroie (12a, 12b) comprend un premier dispositif de nettoyage (30a) pour la première courroie de transport (13a) et un deuxième dispositif de nettoyage (30b) pour la deuxième courroie de transport (13b).

4. Machine d'emballage (10) permettant d'emballer des produits destinés à l'emballage au moyen d'un film étirable selon l'une quelconque des revendications 1 à 3, **caractérisée en ce que** les dispositifs de nettoyage (30a, 30b) sont montés à la fin d'un trajet de transport de film dans la direction de transport du film (X).

5. Machine d'emballage (10) permettant d'emballer des produits destinés à l'emballage au moyen d'un film étirable selon l'une quelconque des revendications 1 à 4, **caractérisée en ce qu'**un élément de nettoyage (31a, 31b) touche la surface de la courroie de transport au niveau d'une poulie de renvoi (27c, 27d).

6. Machine d'emballage (10) permettant d'emballer des produits destinés à l'emballage au moyen d'un film étirable selon la revendication 5, **caractérisée en ce que** l'élément de nettoyage (31a, 31b) est réalisé sous la forme d'un racloir qui présente une forme courbe, et la direction de sa courbure correspond à la direction de la courbure de la poulie de renvoi (27c, 27d), dans laquelle le rayon (r2) de la courbure du bord extérieur du racloir est en particulier inférieur au rayon de la poulie de renvoi (27c, 27d).

7. Machine d'emballage (10) permettant d'emballer des produits destinés à l'emballage au moyen d'un film étirable selon la revendication 5 ou 6, **caractérisée en ce que** l'élément de nettoyage (31a, 31b) est appliqué par ressort contre la courroie de transport et/ou contre la poulie de renvoi (27c, 27d).

8. Machine d'emballage (10) permettant d'emballer des produits destinés à l'emballage au moyen d'un film étirable selon la revendication 7, **caractérisée en ce que** l'élément de nettoyage (31a, 31b) est relié au convoyeur à courroie (12a, 12b) par un axe de rotation (D), et un ressort (32a, 32b), en particulier un ressort hélicoïdal, déplace l'élément de nettoyage (31a, 31b) sur l'axe de rotation (D) en direction d'une force de ressort de sorte que l'élément de nettoyage (31a, 31b) est poussé contre la courroie de transport (13a, 13b) et/ou contre la poulie de renvoi (27c, 27d).

9. Machine d'emballage (10) permettant d'emballer des produits destinés à l'emballage au moyen d'un film étirable selon l'une quelconque des revendications 1 à 8, **caractérisée en ce que** l'élément de nettoyage (31a) est disposé par rapport à la courroie de transport (13a, 13b) de telle sorte que le support (33a, 33b) de l'élément de nettoyage (31a, 31b) sur le convoyeur à courroie (12a, 12b) suit dans la direction de transport de la courroie de transport (13a, 13b) le point de contact entre la courroie de transport (13a, 13b) et l'élément de nettoyage (31a, 31b).

10. Machine d'emballage (10) permettant d'emballer des produits destinés à l'emballage au moyen d'un film étirable selon l'une quelconque des revendications 1 à 9, **caractérisée en ce que** la direction de la dimension longitudinale (L) de l'élément de nettoyage (31a, 31b) est substantiellement contraire à la tangente (T) de la courroie de transport (13a, 13b) dans la direction de transport au point de contact entre l'élément de nettoyage (31a) et la courroie de transport (13a, 13b).

11. Machine d'emballage (10) permettant d'emballer des produits destinés à l'emballage au moyen d'un film étirable selon l'une quelconque des revendications 1 à 10, **caractérisée en ce que** l'élément de nettoyage comprend un angle aigu, de préférence inférieur à 15°, à l'endroit qui est réalisé pour le contact avec la courroie de transport et/ou la poulie de renvoi.

12. Machine d'emballage (10) permettant d'emballer des produits destinés à l'emballage au moyen d'un film étirable selon l'une quelconque des revendications 1 à 11, **caractérisée en ce que** l'élément de nettoyage présente un marquage (42a) qui indique une limite d'usure de l'élément de nettoyage (31a, 31b).

13. Machine d'emballage (10) permettant d'emballer des produits destinés à l'emballage au moyen d'un film étirable selon l'une quelconque des revendications 1 à 12, **caractérisée en ce que** la poulie de renvoi présente un capteur de contact, le capteur de contact émettant un signal de dérangement si l'élément de nettoyage n'est pas en contact avec le capteur de contact, et/ou émettant un signal de service si l'élément de nettoyage est en contact avec le capteur de contact.
